# EUROPEAN PATENT APPLICATION

(11) **EP 3 499 946 A1**
(43) Date of publication of application: **19.06.2019**
(21) Application number: 17838717.1
(22) Date of filing: 09.08.2017
(51) Int. Cl.: H04W 24/02

(54) **METHOD FOR INSTRUCTING AND DISCOVERING SERVICE, BASE STATION AND USER EQUIPMENT**

(30) Priority: 11.08.2016 CN 201610659872
(71) Applicant: NTT DOCOMO, INC., Tokyo (JP)
(72) Inventor: WANG, Huan, Beijing 100190 (CN); MU, Qin, Beijing 100190 (CN); LIU, Liu, Beijing 100190 (CN); JIANG, Huiling, Beijing 100190 (CN); OKUBO, Naoto, Tokyo (JP); TAKEDA, Kazuaki, Tokyo (JP)
(74) Representative: Hoffmann Eitle
(86) International application number: PCT/CN2017/096540
(87) International publication number: WO 2018/028587

(57) **Abstract**

Disclosed are a method for a base station to instruct a service, a method for a user equipment in a sleep state to discover the service, a base station and a user equipment. The method for a base station to instruct a service comprises: detecting an upcoming service; where the upcoming service is detected, generating service instruction information, wherein the service instruction information comprises a service identifier of the upcoming service or at least a portion of bits in a temporary mobile group identifier; and transmitting the service instruction information to the user equipment by means of multicast or broadcast, wherein the data volume of the service instruction information is smaller than the data volume of the Single Cell-Multicast Control Channel information.

## Description

### TECHNICAL FIELD

The present disclosure relates to a field of mobile communications, and particularly to a method for indicating and discovering service in the Internet of Things (IOT), a base station and a user equipment.

### BACKGROUND

In recent years, the Narrow Band Internet of Things (NB-IoT) is being studied. Based on traditional wireless communication network technology, NB-IoT uses a narrow frequency band of approximately 180 kHz for information transmission and reception.

In NB-IoT, a user equipment (UE) has been able to support Single Cell-Point to Multi-point (SC-PTM) communications. Since there are a large number of user equipment (UE) in the NB-IoT system and a large number of services for these numerous user equipment (UE), frequent upcoming services may occur within a certain coverage in a certain time interval in the NB-IoT system.

In order to enable the user equipment (UE) in a cell to discover an upcoming service, the base station (eNB) transmits a change notification message (Single Cell-Multicast Control Channel Change Notification, SC-MCCH Change Notification) in a multicast or broadcast manner in a downlink control channel (Narrow Band Physical Downlink Control Channel, NPDCCH), thereafter the base station (eNB) transmits Single Cell-Multicast Control channel (SC-MCCH) information in a multicast or broadcast manner in a downlink shared channel (Narrow Band Physical Downlink Shared Channel, NPDSCH), the SC-MCCH information includes control information about all ongoing services and upcoming services, such as temporary mobile group identity (TMGI) of the ongoing services, and temporary mobile group identity (TMGI) of the upcoming services, etc.; and the user equipment (UE) is woken up upon receiving the change notification message to receive and decode the Single Cell-Multicast Control channel (SC-MCCH) information to be subsequently transmitted in a multicast or broadcast manner in the downlink shared channel (NPDSCH), so as to determine whether an upcoming service is a service of interest and further obtain control information about the multicast or broadcast traffic.

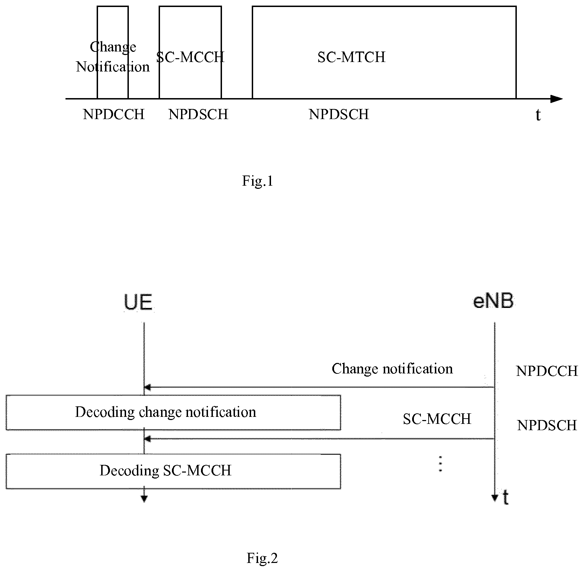

FIG. 1 is a schematic diagram showing transmission timing of the change notification message, the Single Cell-Multicast Control Channel (SC-MCCH) information, and the Single Cell-Multicast Traffic Channel (SC-MTCH) data in the prior art. As shown in FIG. 1, after generating the change notification message, the base station (eNB) transmits the change notification message to the user equipment (UE) in a multicast or broadcast manner in a downlink control channel (NPDCCH), thereafter transmits the Single Cell-Multicast Control Channel (SC-MCCH) information to the user equipment (UE) in a multicast or broadcast manner in a downlink shared channel (NPDSCH), and then continues to transmit Single Cell-Multicast Traffic Channel (SC-MTCH) data to the user equipment (UE) in a multicast or broadcast manner in the downlink shared channel (NPDSCH).

FIG. 2 is a schematic diagram showing performing conventional service indication and discovery through the change notification message. As shown in FIG. 2, in the base station (eNB), an upcoming service triggers a change notification message, once the change notification message is triggered in the base station (eNB), the base station (eNB) transmits the change notification message to the user equipment (UE) in a multicast or broadcast manner in a downlink control channel (NPDCCH), thereafter transmits the Single Cell-Multicast Control Channel (SC-MCCH) information to the user equipment (UE) in a multicast or broadcast manner in a downlink shared channel (NPDSCH). On the other hand, as shown in FIG. 2, in the user equipment (UE), upon receiving the change notification message, the user equipment (UE) is woken up to receive and decode the Single Cell-Multicast Control Channel (SC-MCCH) information via the downlink shared channel (NPDSCH), so as to determine whether there is a service of interest among the upcoming services based on control information about the upcoming services as included in the Single Cell-Multicast Control Channel (SC-MCCH) information. If the user equipment (UE) determines that there is a service of interest among the upcoming services, the user equipment (UE) continues to receive and decode the Single Cell-Multicast Traffic Channel (SC-MTCH) information which the user equipment (UE) is interested as indicated in the Single Cell-Multicast Control Channel (SC-MCCH) information. If the user equipment (UE) determines that there is no service of interest among the upcoming services, the user equipment (UE) goes into a sleep state again.

As mentioned above, since there are a large number of user equipment (UE) in the NB-IoT system and a large number of services for these numerous user equipment (UE), for a specific user equipment (UE) in a sleep state, it needs to frequently decode the change notification message triggered by the upcoming service which it is not interested and the Single Cell-Multicast Control Channel (SC-MCCH) information, this results in high power consumption and low power efficiency of the user equipment (UE).

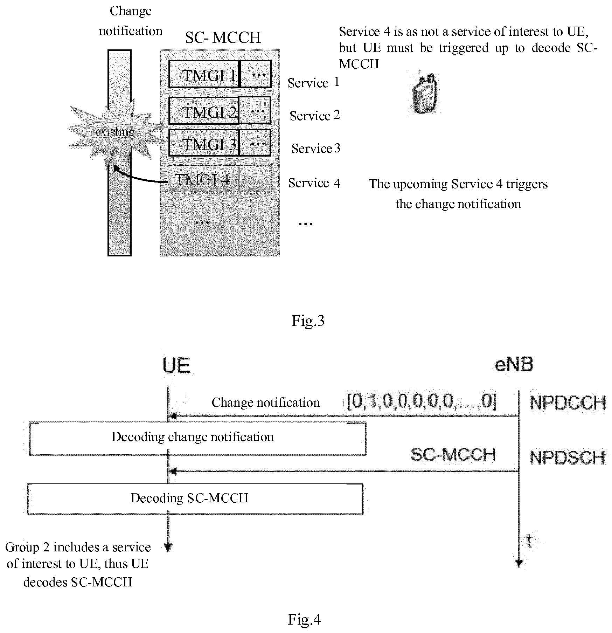

As shown in FIG. 3, various services are shown: Service 1, Service 2, Service 3, Service 4, ..., where Service 1, Service 2, and Service 3 are ongoing services, and Service 4 is an upcoming service. In the base station (eNB), the upcoming service 4 triggers a change notification message, the base station (eNB) multicasts the change notification message to the user equipment UE, thereafter continues to multicast the Single Cell-Multicast Control Channel (SC-MCCH) information including a temporary mobile group identity (TMGI 1) of Service 1, a temporary mobile group identity (TMGI 2) of Service 2, a temporary mobile group identity (TMGI 3) of Service 3, and a temporary mobile group identity (TMGI 4) of Service 4. On the other hand, as shown in FIG. 3, at a specific user equipment (UE), after receiving the change notification message and after receiving and decoding the Single Cell-Multicast Control Channel (SC-MCCH) information, Service 4 is determined as not a service of interest according to the temporary mobile group identity (TMGI 4) of Service 4. To this particular user equipment (UE), its decoding of the Single Cell-Multicast Control Channel (SC-MCCH) information is not necessary, which results in power waste of this particular user equipment (UE).

Therefore, for a specific user equipment (UE), there is a need for a method that can effectively prevent the particular user equipment (UE) from decoding the Single Cell-Multicast Control Channel (SC-MCCH) information that is triggered by a service that the particular user equipment (UE) is not interested.

### SUMMARY

According to an aspect of the present disclosure, there is provided a method for a base station to perform service indication, comprising: detecting upcoming services; in a case where an upcoming service is detected, generating service indication information that includes at least a portion of bits of a service identity (ID) or a temporary mobile group identity (TMGI) of the upcoming service; and transmitting the service indication information to a user equipment in a multicast or broadcast manner, wherein a data volume of the service indication information is smaller than a data volume of the Single Cell-Multicast Control Channel (SC-MCCH) information.

According to an embodiment of the present disclosure, the service indication information is a predetermined number of bits in a change notification message, and the service indication information includes a portion of bits of the service identity (ID) or the temporary mobile group identity (TMGI) of the upcoming services so as to indicate service groups to which the upcoming services belong, wherein transmitting the service indication information to a user equipment in a multicast or broadcast manner comprises: transmitting, in a downlink control channel (NPDCCH), the change notification message that includes the service indication information to the user equipment in a multicast or broadcast manner.

According to an embodiment of the present disclosure, the method for a base station to perform service indication further comprises: transmitting the Single Cell-Multicast Control Channel (SC-MCCH) information to the user equipment in a multicast or broadcast manner in a downlink shared channel (NPDSCH).

According to an embodiment of the present disclosure, the number of service groups to which the upcoming services belong as indicated in the service indication information is a predetermined indication number, the method further comprises: in a case where a total number of service groups to which the upcoming services belong exceeds the predetermined indication number, storing upcoming services not indicated in the service indication information.

According to an embodiment of the present disclosure, the method for a base station to perform service indication further comprises: in a case where the number of service groups to which the stored upcoming services belong exceeds a predetermined storage threshold, indicating all upcoming services in the change notification message.

According to an embodiment of the present disclosure, transmitting the service indication information to a user equipment in a multicast or broadcast manner comprises: transmitting the service indication information to the user equipment in a multicast or broadcast manner in a downlink shared channel (NPDSCH)

According to an embodiment of the present disclosure, the method for a base station to perform service indication further comprises: before transmitting the service indication information, transmitting downlink control information (DCI) to the user equipment in a multicast or broadcast manner in the downlink control channel (NPDCCH), the downlink control information (DCI) being used to indicate the service indication information; and after transmitting the service indication information, transmitting the Single Cell-Multicast Control Channel (SC-MCCH) information to the user equipment in a multicast or broadcast manner in the downlink shared channel (NPDSCH).

According to another aspect of the present disclosure, there is provided a base station, comprising: a service detecting unit configured to detect upcoming services; a service indicating unit configured to, in a case where an upcoming service is detected by the service detecting unit, generate service indication information that includes at least a portion of bits of a service identity (ID) or a temporary mobile group identity (TMGI) of the upcoming service; and an information multicasting unit configured to transmit the service indication information to a user equipment in a multicast or broadcast manner, wherein a data volume of the service indication information is smaller than a data volume of the Single Cell-Multicast Control Channel (SC-MCCH) information.

According to an embodiment of the present disclosure, the service indication information is a predetermined number of bits in a change notification message, and the service indication information includes a portion of bits of the service identity (ID) or the temporary mobile group identity (TMGI) of the upcoming services so as to indicate service groups to which the upcoming services belong, wherein the information multicasting unit is configured to transmit, in a downlink control channel (NPDCCH), the change notification message that includes the service indication information to the user equipment in a multicast or broadcast manner.

According to an embodiment of the present disclosure, the number of service groups to which the upcoming services belong as indicated in the service indication information is a predetermined indication number, and the base station further comprises: a service storing unit configured to, in a case where a total number of service groups to which the upcoming services belong exceeds the predetermined indication number, store upcoming services not indicated in the service indication information.

According to an embodiment of the present disclosure, the service indicating unit is further configured to: in a case where the number of service groups to which the stored upcoming services belong exceeds a predetermined storage threshold, indicate all upcoming services in the change notification message.

According to an embodiment of the present disclosure, the information multicasting unit is further configured to transmit the Single Cell-Multicast Control Channel (SC-MCCH) information to the user equipment in a multicast or broadcast manner in a downlink shared channel (NPDSCH).

According to an embodiment of the present disclosure, the information multicasting unit is configured to transmit the service indication information to the user equipment in a multicast or broadcast manner in a downlink shared channel (NPDSCH).

According to an embodiment of the present disclosure, the information multicasting unit is further configured to: before transmitting the service indication information, transmit the downlink control information (DCI) to the user equipment in a multicast or broadcast manner in the downlink control channel (NPDCCH); and after transmitting the service indication information, transmit the Single Cell-Multicast Control Channel (SC-MCCH) information to the user equipment in a multicast or broadcast manner in the downlink shared channel (NPDSCH), wherein the downlink control information (DCI) is used to indicate the service indication information.

According to another aspect of the present disclosure, there is provided a method for performing service discovery by a user equipment in a sleep state, comprising: monitoring service indication information including at least a portion of bits of a service identity (ID) or a temporary mobile group identity (TMGI) of an upcoming service; in a case where the service indication information is detected, determining whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment; and in a case where a match is determined, receiving and decoding Single Cell-Multicast Control Channel (SC-MCCH) information in a downlink shared channel (NPDSCH), wherein a data volume of the service indication information is smaller than a data volume of the Single Cell-Multicast Control Channel (SC-MCCH) information.

According to an embodiment of the present disclosure, the service indication information is a predetermined number of bits in a change notification message, said monitoring service indication information comprises: monitoring the change notification message that includes the service indication information in a downlink control channel (NPDCCH).

According to an embodiment of the present disclosure, monitoring service indication information comprises: monitoring downlink control information (DCI) in the downlink control channel (NPDCCH); and in a case where downlink control information (DCI) is detected, receiving and decoding the service indication information in the downlink shared channel (NPDSCH).

According to an embodiment of the present disclosure, in a case where it is determined that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, the method further comprises: entering the sleep state again.

According to another aspect of the present disclosure, there is provided a user equipment, comprising: a service monitoring unit configured to monitor service indication information including at least a portion of bits of a service identity (ID) or a temporary mobile group identity (TMGI) of an upcoming service; a service screening unit configured to, in a case where the service indication information is detected, determine whether the at least a portion of bits of the service identity (ID) or the temporary mobile group identity (TMGI) of the upcoming service included in the service indication information matches with corresponding bits in the pre-stored service identity (ID) or temporary mobile group identity

(TMGI) in the user equipment; and a service information receiving unit configured to, in a case where a match is determined by the service screening unit, receive and decode Single Cell-Multicast Control Channel (SC-MCCH) information in a downlink shared channel (NPDSCH), wherein a data volume of the service indication information is smaller than a data volume of the Single Cell-Multicast Control Channel (SC-MCCH) information.

According to an embodiment of the present disclosure, the service indication information is a predetermined number of bits in a change notification message, and wherein the service monitoring unit is configured to monitor the change notification message that includes the service indication information in a downlink control channel (NPDCCH).

According to an embodiment of the present disclosure, the service monitoring unit is configured to: monitor downlink control information (DCI) in the downlink control channel (NPDCCH); and in a case where downlink control information (DCI) is detected, receive and decode the service indication information in the downlink shared channel (NPDSCH).

According to an embodiment of the present disclosure, the user equipment further comprises: a state control unit configured to: in a case where it is determined by the service screening unit that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, control the user equipment to enter the sleep state again.

It is to be understood that both the foregoing general description and the following detailed description are exemplary, and intended to provide further explanation of the technology sought for protection.

### BRIEF DESCRIPTION OF THE DRAWINGS

The foregoing and other objects, features and advantages of the present disclosure will become more apparent from the detailed description of the embodiments of the present disclosure in conjunction with the accompanying drawings. The drawings are to provide further understanding for the embodiments of the present disclosure and constitute a portion of the specification, and are intended to interpret the present disclosure together with the embodiments rather than to limit the present disclosure. In the drawings, the same reference sign generally refers to the same component or step.
FIG. 1 is a schematic diagram of transmission timing of the change notification message, the Single Cell-Multicast Control Channel (SC-MCCH) information, and the Single Cell-Multicast Traffic Channel (SC-MTCH) data in the prior art;
FIG. 2 is a schematic diagram of performing conventional service indication and discovery through the change notification message;
FIG. 3 is a schematic diagram of a user equipment unnecessarily decoding the Single Cell-Multicast Control Channel (SC-MCCH) information;
FIG. 4 is a schematic diagram of performing service indication and discovery through a service indication bitmap in the change notification message;
FIG. 5 is a schematic flowchart of a method for performing service indication in a base station (eNB) according to an embodiment of the present disclosure;
FIG. 6 is a schematic flowchart of a method for performing service discovery in a user equipment (UE) in a sleep state according to an embodiment of the present disclosure;
FIG. 7 is a schematic flowchart of a method for performing service indication in a base station (eNB) according to a first embodiment of the present disclosure;
FIG. 8 is a schematic flowchart of a method for performing service discovery in a user equipment (UE) in a sleep state according to the first embodiment of the present disclosure;
FIG. 9 is a schematic flowchart of a method for performing service indication in a base station (eNB) according to a second embodiment of the present disclosure;
FIG. 10 is a schematic flowchart of a method for performing service discovery in a user equipment (UE) in a sleep state according to the second embodiment of the present disclosure;
FIG. 11 is a schematic block diagram of a base station according to an embodiment of the present disclosure;
FIG. 12 is a schematic block diagram of a user equipment according to an embodiment of the present disclosure; and
FIG. 13 shows power consumption ratio of the user equipment between the method for service discovery shown in Table 1 and FIG. 4 and the method for service discovery according to the second embodiment of the present disclosure in a case of one upcoming service and different numbers of ongoing services under given transmission parameters.

### DETAILED DESCRIPTION

To make the objectives, technical solutions, and advantages of the present disclosure more clear, exemplary embodiments of the present disclosure will be described in detail with reference to the accompanying drawings. Obviously, the described embodiments merely are only part of the embodiments of the present disclosure, rather than all of the embodiments of the present disclosure, it should be understood that the present disclosure is not limited to the exemplary embodiments described herein. All other embodiments obtained by those skilled in the art without paying inventive efforts should all fall into the protection scope of the present disclosure.

For a particular user equipment (UE), in order to reduce decoding of the Single Cell-Multicast Control Channel (SC-MCCH) information triggered by an upcoming service that the particular User Equipment (UE) is not interested, a service grouping and indicating method is already proposed, which method divides services into N service groups, and inserts an N-bit service indication bitmap in the change notification message, wherein the N bits of the service indication bitmap are in one-to-one correspondence with the N service groups, thus, it is indicated through the N bits of the service indication bitmap that in which of the N service groups the upcoming services are. A service group index of service groups to which a specific service belongs can be calculated by using a service identity (ID) or a temporary mobile group identity (TMGI) of the specific service according to the following formula.
Service Group Index = (Service Identity (ID) or Temporary Mobile Group Identity (TMGI)) mod N

Taking the change notification message that includes a 19-bit service indication bitmap as an example, correspondence among the bitmap, the service group index, and the service ID is shown in Table 1 below. In addition, FIG. 4 shows that the UE decodes the Single Cell-Multicast Control Channel (SC-MCCH) information only when the service group indicated by the service indication bitmap in the change notification message includes the service that the UE is interested.

**Table 1**

| **Bitmap** | **0** | **1** | **0** | **0** | **0** | **0** | **...** | **0** |
|---|---|---|---|---|---|---|---|---|
| Group Index | 1 | 2 | 3 | 4 | 5 | 6 | ... | 19 |
| Corresponding Service ID | 0,19,38... | 1,20, 39... | 2, 21, 40... | 3, 22, 41... | 4, 23, 42... | 5, 24, 43... | ... | 18, 37, 56... |

The bitmap in Table 1 is [0,1,0,0,0,0,0,0,0,0,0,0,0,0,0,0,0,0,0], which indicates that the incoming service is the service in Group 2, and the services in Group 2 include services having the service ID of 1, 20, 39, 58, etc.

In a case where it is assumed that the change notification message includes a 19-bit service indication bitmap and the service identity (ID) includes 24 bits, 2²⁴/19 services are included in each service group, thus, for a specific user terminal (UE), as long as the bits in the service indication bitmap corresponding to the service groups to which the service interested by the particular user terminal belongs is indicated, even if the service that the specific user terminal is really interested is not included in the upcoming services, the specific user terminal still has to decode the Single Cell-Multicast Control Channel (SC-MCCH) information. For example, the specific user terminal (UE) is interested in the service with the service ID of 20, the service with the service ID of 20 belongs to service Group 2, and the service indication bitmap in the change notification message indicates that the upcoming service belongs to the service Group 2, thus the particular user terminal (UE) determines that it may be interested in the upcoming service and needs to decode the subsequent Single Cell-Multicast Control Channel (SC-MCCH) information. However, by decoding the subsequent Single Cell-Multicast Control Channel (SC-MCCH) information, the particular user terminal (UE) determines that the service ID of the upcoming service is 39, the specific user terminal (UE) is not interested in the service whose service ID is 39, which thereby still results in high power consumption and low power efficiency of the particular user terminal (UE).

Accordingly, the service grouping and indicating method shown in Table 1 and FIG. 4 is still not exquisite enough, and unnecessary Single Cell-Multicast Control Channel (SC-MCCH) information decoding cannot be effectively avoided.

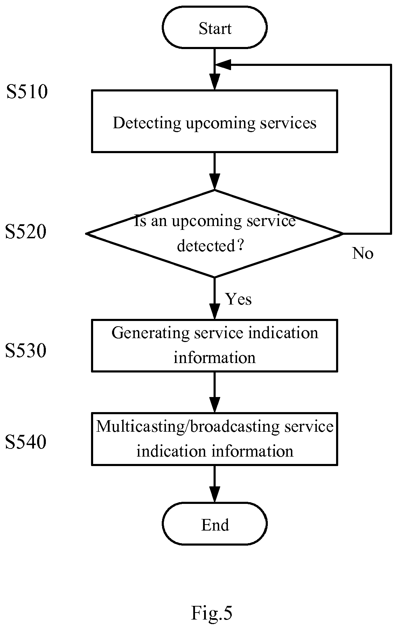

FIG. 5 shows a schematic flowchart of a method for performing service indication in a base station (eNB) according to an embodiment of the present disclosure.

At step S510, the base station (eNB) detects upcoming services. The method for detecting upcoming services in a base station in the prior art may be used, and the method for detecting upcoming services in a base station to be developed in the future may also be used, which is not limited herein. It should be understood that the upcoming services mentioned here may be at least one upcoming service, and no limitation is made to the number of the upcoming services.

At step S520, the base station (eNB) determines whether an upcoming service is detected.

In a case where it is determined at step S520 that no upcoming service is detected, the service indicating method according to an embodiment of the present disclosure returns to step S510 to continue detecting upcoming services.

In a case where it is determined at step S520 that an upcoming service is detected, the service indicating method according to an embodiment of the present disclosure proceeds to step S530. At step S530, the base station (eNB) generates service indication information, wherein the service indication information includes at least a portion of bits of a service identity (ID) or a temporary mobile group identity (TMGI) of the upcoming service, and a data volume of the service indication information is smaller than a data volume of the Single Cell-Multicast Control Channel (SC-MCCH) information. The Single Cell-Multicast Control Channel (SC-MCCH) information includes information such as temporary mobile group identity (TMGI) of upcoming services, temporary mobile group identity (TMGI) of ongoing services, and others.

Thereafter, at step S540, the service indication information is transmitted to the user equipment in a multicast or broadcast manner.

According to an embodiment of the present disclosure, the user equipment (UE) pre-stores a service identity (ID) or a temporary mobile group identity (TMGI) of a service of interest, after the service indication information is detected, by means of determining whether the at least a portion of bits of the service identity (ID) or the temporary mobile group identity (TMGI) of the upcoming service included in the service indication information matches with corresponding bits in the pre-stored service identity (ID) or temporary mobile group identity (TMGI), the user equipment determines if the upcoming service is a service of interest, and the Single Cell-Multicast Control Channel (SC-MCCH) information is received and decoded only when it is determined that the upcoming service is likely to be a service of interest. Since the data volume of the service indication information is smaller than the data volume of the Single Cell-Multicast Control Channel (SC-MCCH) information, a decoding data amount of the user equipment (UE) can be reduced, thereby power consumption of the user equipment (UE) is reduced and power efficiency of the user equipment (UE) is improved.

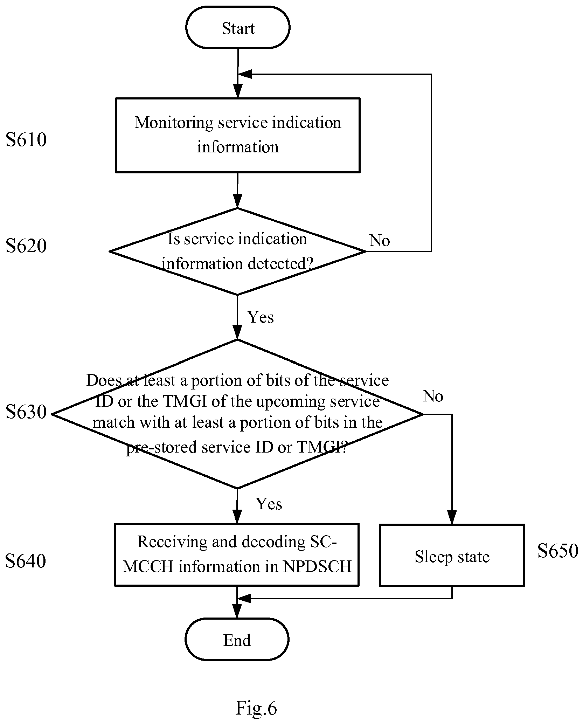

FIG. 6 shows a schematic flowchart of a method for performing service discovery in a user equipment (UE) in a sleep state according to an embodiment of the present disclosure.

At step S610, the user equipment (UE) in a sleep state monitors service indication information, the service indication information includes at least a portion of bits of a service identity (ID) or a temporary mobile group identity (TMGI) of an upcoming service.

At step S620, the user equipment (UE) determines whether the service indication information is detected.

In a case where it is determined at step S620 that no service indication information is detected, the method for service discovery according to an embodiment of the present disclosure returns to step S610 to continue monitoring service indication information.

In a case where it is determined at step S620 that the service indication information is detected, the method for service discovery according to an embodiment of the present disclosure proceeds to step S630. At step S630, the user equipment (UE) determines whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment.

In a case where a mismatch is determined at step S630, the method for service discovery according to an embodiment of the present disclosure proceeds to step S650, and the user equipment enters the sleep state again at step S650.

In a case where a match is determined at step S630, the method for service discovery according to an embodiment of the present disclosure proceeds to step S640. At step S640, the user equipment (UE) receives and decodes the Single Cell-Multicast Control Channel (SC-MCCH) information in a downlink shared channel (NPDSCH), wherein a data volume of the service indication information is smaller than a data volume of the Single Cell-Multicast Control Channel (SC-MCCH) information. The Single Cell-Multicast Control Channel (SC-MCCH) information includes information such as temporary mobile group identity (TMGI) of upcoming services, temporary mobile group identity (TMGI) of ongoing services, and others.

In the method for service discovery according to an embodiment of the present disclosure, only when the user equipment (UE) determines that the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment, the user equipment (UE) will receive and decode the Single Cell-Multicast Control Channel (SC-MCCH) information. Since the service indication information includes only the at least a portion of bits in the service identity (ID) or the temporary mobile group identity (TMGI) of an upcoming service, a decoding amount of the user equipment (UE) is reduced, and unnecessary decoding of Single Cell-Multicast Control Channel (SC-MCCH) information by the user equipment (UE) can also be reduced.

According to an embodiment of the present disclosure, the service indication information may be transmitted in a multicast or broadcast manner in a downlink control channel (NPDCCH) or may be transmitted in a multicast or broadcast manner in a downlink shared channel (NPDSCH).

Next, the method for service indication and discovery according to the present disclosure will be described in detail in a first embodiment and a second embodiment of the present disclosure.

According to a first embodiment of the present disclosure, the service indication information is a predetermined number of bits N in the change notification message, the service indication information includes at least a portion of bits of a service identity (ID) or a temporary mobile group identity (TMGI) of upcoming services. The service indication information according to the first embodiment of the present disclosure is also completely different from the bitmap given in Table 1.

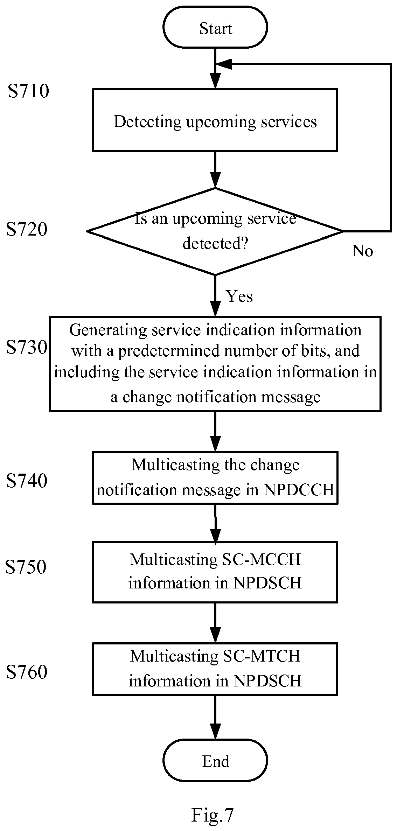

FIG. 7 shows a schematic flowchart of a method for performing service indication in a base station (eNB) according to a first embodiment of the present disclosure.

At step S710, the base station (eNB) detects upcoming services. The method for detecting upcoming services in a base station in the prior art may be used, and the method for detecting upcoming services in a base station to be developed in the future may also be used, which is not limited herein. It should be understood that the upcoming services mentioned here may be at least one upcoming service, and no limitation is made to the number of the upcoming services.

At step S720, the base station (eNB) determines whether an upcoming service is detected.

In a case where it is determined at step S720 that no upcoming service is detected, the service indicating method according to the first embodiment of the present disclosure returns to step S710 to continue detecting upcoming services.

In a case where it is determined at step S720 that an upcoming service is detected, the service indicating method according to the first embodiment of the present disclosure proceeds to step S730, the base station (eNB) generates service indication information with a predetermined number of bits and includes it into a change notification message at step S730, the service indication information includes at least a portion of bits of a service identity (ID) or a temporary mobile group identity (TMGI) of the upcoming service.

Thereafter, at step S740, the base station (eNB) transmits the change notification message that includes the service indication information to the user terminal (UE) in a multicast or broadcast manner in a downlink control channel (NPDCCH).

Next, at step S750, the base station (eNB) multicasts Single Cell-Multicast Control Channel (SC-MCCH) information in a downlink shared channel (NPDSCH), and a data volume of the service indication information is smaller than a data volume of the Single Cell-Multicast Control Channel (SC-MCCH) information.

Further, at step S760, the base station (eNB) transmits Single Cell-Multicast Traffic Channel (SC-MTCH) data in a multicast or broadcast manner in the downlink shared channel (NPDSCH).

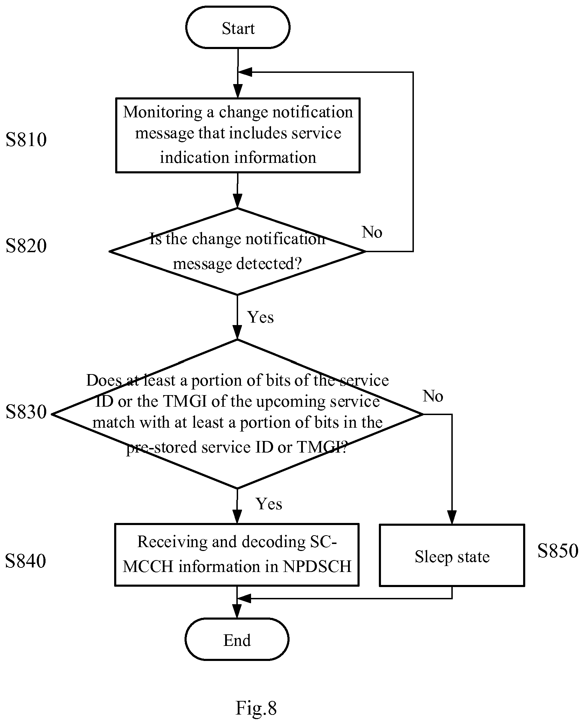

FIG. 8 shows a schematic flowchart of a method for performing service discovery in a user equipment (UE) in a sleep state according to the first embodiment of the present disclosure.

At step S810, the user equipment (UE) in a sleep state monitors a change notification message in a downlink control channel (NPDCCH), the change notification message includes service indication information with a predetermined number of bits, the service indication information includes at least a portion of bits of a service identity (ID) or a temporary mobile group identity (TMGI) of an upcoming service.

At step S820, the user equipment (UE) determines whether a change notification message that includes the service indication information is detected.

In a case where it is determined at step S820 that no change notification message that includes the service indication information is detected, the method for service discovery according to the embodiment of the present disclosure returns to step S810 to continue monitoring the change notification message that includes the service indication information.

In a case where it is determined at step S820 that the change notification message including the service indication information is detected, the method for service discovery according to the first embodiment of the present disclosure proceeds to step S830. At step S830, the user equipment (UE) determines whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment.

In a case where a mismatch is determined at step S830, the method for service discovery according to the embodiment of the present disclosure proceeds to step S850, and the user equipment (UE) enters the sleep state again at step S850.

In a case where a match is determined at step S830, the method for service discovery according to the embodiment of the present disclosure proceeds to step S840. At step S840, the user equipment (UE) receives and decodes Single Cell-Multicast Control Channel (SC-MCCH) information in a downlink shared channel (NPDSCH), a data volume of the service indication information is smaller than a data volume of the Single Cell-Multicast Control Channel (SC-MCCH) information.

The method for service indication and discovery according to the first embodiment of the present disclosure transmits the change notification message including the service indication information in a multicast or broadcast manner in the downlink control channel (NPDCCH), and the service indication information includes at least a portion of bits of a service identity (ID) or a temporary mobile group identity (TMGI) of the upcoming service; only when the user equipment (UE) detects the change notification message and determines that the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment, the user equipment (UE) will receive and decode the Single Cell-Multicast Control Channel (SC-MCCH) information.

Since the service indication information includes at least a portion of bits of a service identity (ID) or a temporary mobile group identity (TMGI) of an upcoming service, services may be grouped into more service groups according to the first embodiment of the present disclosure, the number of services included in each service group is relatively small, lowering the possibility of the user equipment (UE) to determine that it may be interested in an upcoming service within a certain service group and to decode the Single Cell-Multicast Control Channel (SC-MCCH) information, thereby reducing power consumption of the user equipment (UE) on the whole and improving power efficiency of the user equipment (UE). On the other hand, also, since the service indication information includes at least a portion of bits of a service identity (ID) or a temporary mobile group identity (TMGI) of an upcoming service, a decoding data amount of the user equipment (UE) is also reduced, which thereby also reduces power consumption of the user equipment (UE) and increases power efficiency of the user equipment (UE) correspondingly.

According to the first embodiment of the present disclosure, in a case where the service indication information includes N bits, the services may be grouped into NN service groups, and NN is greater than N, thereby making the service grouping manner more exquisite, power consumption of a specific user equipment (UE) can be further reduced compared to the grouping method shown in Table 1 and FIG. 4.

According to the first embodiment of the present disclosure, at least one service group may be indicated with N bits included in the service indication information.

In a first example, one service group is indicated by N bits included in the service indication information. It is assumed that the N bits included in the service indication information are all used to indicate one service group, the services can be grouped into 2^{N} service groups. Taking the service notification information including the N-bit change notification message and the service identity (ID) or the temporary mobile group identity (TMGI) including M-bit as an example, 2^{M-N} services are included in each service group. For example, the services may be grouped according to the highest N significant bits of the service identity (ID) or the temporary mobile group identity (TMGI), that is, the N bits of the service indication information are the highest N significant bits of an upcoming service.

Specifically, with the service indication information including 19 bits and the service identity (ID) including 24 bits as an example, the services can be encoded into up to 2¹⁹ service groups, each service group includes 2⁵ services, and the highest 19 significant bits of an upcoming service may be used as the service indication information. Compared with the 19 service groups each including 2²⁴/19 services shown in Table 1 and FIG. 4, the grouping method according to the first embodiment of the present disclosure can reduce a large amount of unnecessary decoding of the Single Cell-Multicast Control Channel (SC-MCCH) information by a specific user equipment (UE).

In a second example, two service groups are indicated with N bits included in the service indication information. It is assumed that the N1 bits among the N bits included in the service indication information are used to indicate the first service group and the N2 bits are used to indicate the second service group, and the services can be grouped into 2^{N1} or 2^{N2} service groups. In a case where N1=N2 and N1+N2≤N, taking the service identity (ID) or the temporary mobile group identity (TMGI) including M bits as an example, 2^{M-N1} services are included in each service group. For example, the services may be grouped according to the highest N1 significant bits of the service identity (ID) or the temporary mobile group identity (TMGI), i.e., the N1 bits of the service indication information are the highest N1 significant bits of an upcoming service, the N2 bits of the service indication information are the highest N1 significant bit of another upcoming service.

Specifically, taking the service indication information including 19 bits and the service identity (ID) including 24 bits as an example, for example, N1=N2=9, the services can be encoded into a maximum of 2⁹ service groups, and each service group includes 2¹⁵ services. The 9 bits in the service indication information may be constructed with the highest 9 significant bits of an upcoming service and the other 9 bits in the service indication information may be constructed with the highest 9 significant bits of another upcoming service. Compared with the 19 service groups each including 2²⁴/19 services shown in Table 1 and FIG. 4, the grouping method according to the first embodiment of the present disclosure can reduce a large amount of unnecessary decoding of the Single Cell-Multicast Control Channel (SC-MCCH) information by a specific user equipment (UE).

It should be known that it is possible that only a portion of the N bits included in the service indication information are used to indicate the service group, and the remaining bits are used as reserved control bits.

According to the first embodiment of the present invention, the number of service groups to which the upcoming services belong as indicated in the service indication information is a predetermined indication number, and in a case where a total number of service groups to which the upcoming services belong exceeds the predetermined indication number, upcoming services not indicated in the service indication information is stored, and service indication for the stored upcoming services is delayed.

According to the first embodiment of the present invention, in a case where the number of service groups to which the stored upcoming services belong exceeds a predetermined storage threshold, the service indication manner according to the first embodiment of the present disclosure may be switched to another service indication manner. The other service indication manner may indicate all stored upcoming services at a time, for example, the traditional service indication manner as shown in FIG. 2 or the service indication manner as shown in Table 1 and FIG. 4.

According to the first embodiment of the present disclosure, by setting a predetermined storage threshold, it is allowed to switch between the change notification message provided by the present disclosure and the conventional change notification message or the change notification message shown in Table 1, so that in a case where the number of service groups to which the stored upcoming services belong is not large, unnecessary decoding of the Single Cell-Multicast Control Channel (SC-MCCH) information by a specific user equipment (UE) can be greatly reduced, and in a case where the number of service groups to which the stored upcoming services belong is large, the service indication function can be achieved in time.

According to the first embodiment of the present disclosure, the service prompting mode of the current change notification message may be notified in a high layer signaling manner, or a format indication bit may be set in the change notification message to notify the user equipment (UE) of the current service prompting mode; the user equipment (UE) can learn the service prompting mode of the current change notification message in a high-level signaling manner, or can learn the service prompting mode of the current change notification message according to the set format indication bit in the change notification message.

According to a second embodiment of the present disclosure, the service indication is performed without using the change notification message, before multicast of the Single Cell-Multicast Control Channel (SC-MCCH) information, the service indication information is transmitted in the downlink shared channel (NPDSCH), the service indication information includes at least a portion of bits of a service identity (ID) or a temporary mobile group identity (TMGI) of an upcoming service.

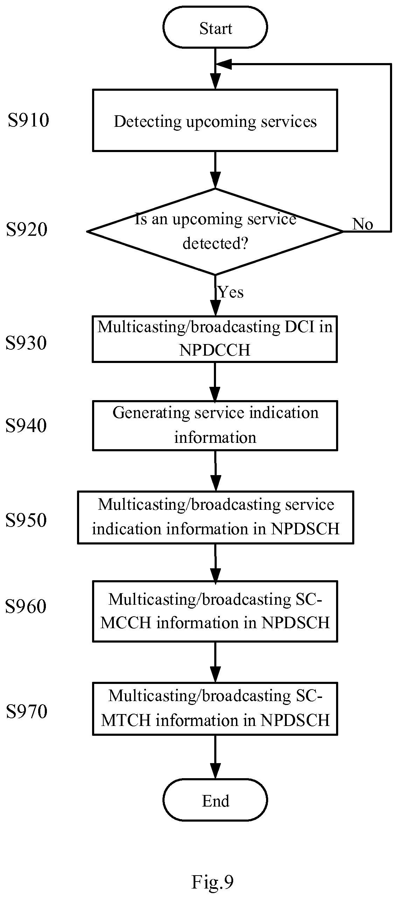

FIG. 9 shows a schematic flowchart of a method for performing service indication in a base station (eNB) according to a second embodiment of the present disclosure.

At step S910, the base station (eNB) detects upcoming services. The method for detecting upcoming services in a base station in the prior art may be used, and the method for detecting upcoming services in a base station to be developed in the future may be used, which is not limited herein. It should be understood that the upcoming services mentioned here may be at least one upcoming service, and no limitation is made to the number of the upcoming services.

At step S920, the base station (eNB) determines whether an upcoming service is detected.

In a case where it is determined at step S920 that no upcoming service is detected, the service indicating method according to the second embodiment of the present disclosure returns to step S910 to continue detecting upcoming services.

In a case where it is determined at step S920 that an upcoming service is detected, the service indicating method according to the embodiment of the present disclosure proceeds to step S930. At step S930, the base station (eNB) transmits the downlink control information (DCI) in a multicast or broadcast manner in a downlink control channel (NPDCCH).

Thereafter, at step S940, the base station (eNB) generates service indication information, the service indication information includes at least a portion of bits of a service identity (ID) or a temporary mobile group identity (TMGI) of the upcoming service.

In the second embodiment of the present disclosure, the service indication information is indicated by the downlink control information (DCI). For example, the service indication information is scheduled using DCI format N1 or N2.

Next, the service indication information is transmitted to the user terminal (UE) in a multicast or broadcast manner in a downlink shared channel (NPDSCH) at step S950, a data volume of the service indication information is smaller than a data volume of the Single Cell-Multicast Control Channel (SC-MCCH) information.

Next, at step S960, the Single Cell-Multicast Control Channel (SC-MCCH) information is transmitted to the user terminal (UE) in a multicast or broadcast manner in the downlink shared channel (NPDSCH).

Further, at step S970, Single Cell-Multicast Traffic Channel (SC-MTCH) data is multicast in the downlink shared channel (NPDSCH).

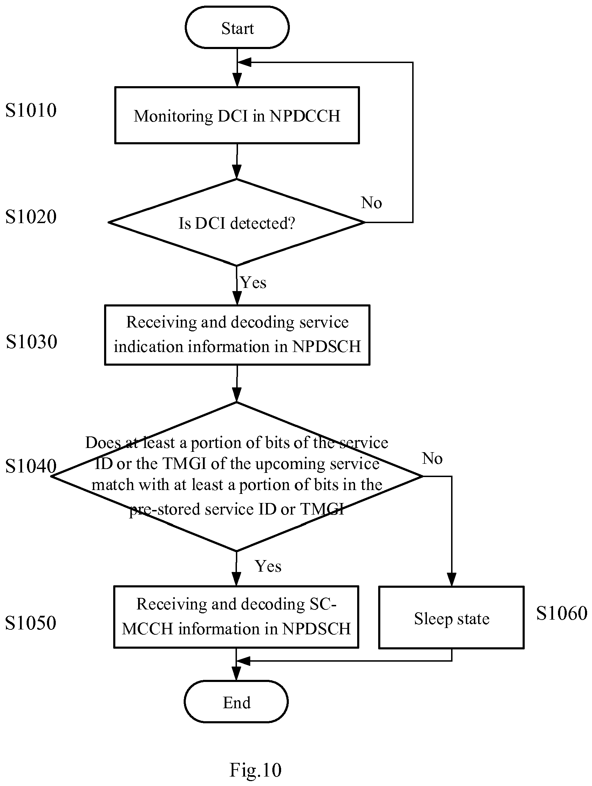

FIG. 10 shows a schematic flowchart of a method for performing service discovery in a user equipment (UE) in a sleep state according to the second embodiment of the present disclosure.

At step S1010, the user equipment (UE) in a sleep state monitors downlink control information (DCI) in a downlink control channel (NPDCCH).

At step S1020, the user equipment (UE) determines whether downlink control information (DCI) is detected.

In a case where it is determined at step S1020 that no downlink control information (DCI) is detected, the method for service discovery according to the second embodiment of the present disclosure returns to step S1010 to continue monitoring the downlink control information (DCI) in the downlink control channel (NPDCCH).

In a case where it is determined at step S1020 that the downlink control information (DCI) is detected, the method for service discovery according to the second embodiment of the present disclosure proceeds to step S1030.

At step S1030, the service indication information is received and decoded in a downlink shared channel (NPDSCH), the service indication information includes at least a portion of bits of a service identity (ID) or a temporary mobile group identity (TMGI) of the upcoming service, a data volume of the service indication information is smaller than a data volume of the Single Cell-Multicast Control Channel (SC-MCCH) information.

At step S1040, the user equipment (UE) determines whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment.

In a case where a mismatch is determined at step S1040, the method for service discovery according to the second embodiment of the present disclosure proceeds to step S1060, and the user equipment (UE) enters the sleep state again at step S1060.

In a case where a match is determined at step S1040, the method for service discovery according to the second embodiment of the present disclosure proceeds to step S1050. At step S1050, the user equipment (UE) receives and decodes the Single Cell-Multicast Control Channel (SC-MCCH) information in the downlink shared channel (NPDSCH).

According to the second embodiment of the present disclosure, the service indication information may include service identity (ID) or temporary mobile group identity (TMGI) of all upcoming services, the Single Cell-Multicast Control Channel (SC-MCCH) information includes temporary mobile group identity (TMGI) of upcoming services, and temporary mobile group identity (TMGI) of ongoing services.

According to the second embodiment of the present disclosure, a maximum indication number of the upcoming services indicated in the service indication information may be preset, in a case where the number of the upcoming services exceeds the maximum indication number, upcoming services not indicated are stored.

According to the second embodiment of the present disclosure, a part or all bits of the service identity (ID) or the temporary mobile group identity (TMGI) of the upcoming service may be included in the service indication information, and the service indication information may include the service identity (ID) or the temporary mobile group identity (TMGI) of all upcoming services, so that service indication can be made more timely, and service indication can be made more accurate, and the user equipment (UE) can be effectively prevented from unnecessarily decoding a large amount of Single Cell-Multicast Control Channel (SC-MCCH) information.

For example, in a case where the service indication information includes all the bits of the service identity (ID) or the temporary mobile group identity (TMGI) of an upcoming service, the user equipment (UE) can accurately determine whether the upcoming service is a service of interest, not just whether an upcoming service is likely to be a service of interest.

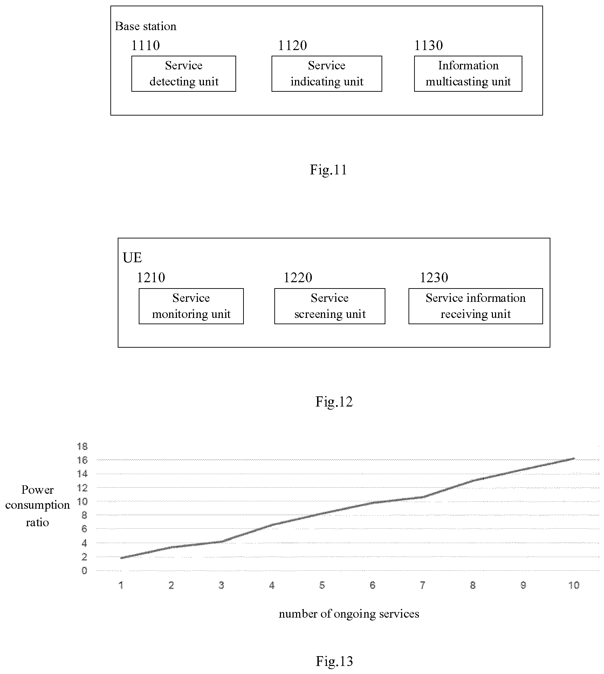

Hereinafter, a schematic block diagram of a base station and a user equipment according to an embodiment of the present disclosure will be described with reference to FIGS. 11-12.

As shown in FIG. 11, a base station 1100 according to an embodiment of the present disclosure comprises a service detecting unit 1110, a service indicating unit 1120, and an information multicasting unit 1130.

The service detecting unit 1110 is configured to detect upcoming services.

The service indicating unit 1120 is configured to, in a case where an upcoming service is detected, generate service indication information, the service indication information including at least a portion of bits of a service identity (ID) or a temporary mobile group identity (TMGI) of the upcoming service. A data volume of the service indication information is smaller than a data volume of the Single Cell-Multicast Control Channel (SC-MCCH) information.

The information multicasting unit 1130 is configured to transmit the service indication information to a user equipment in a multicast or broadcast manner.

As shown in FIG. 12, the user equipment 1200 according to an embodiment of the present disclosure comprises a service monitoring unit 1210, a service screening unit 1220, and a service information receiving unit 1230.

The service monitoring unit 1210 is configured to monitor service indication information, the service indication information including at least a portion of bits of a service identity (ID) or a temporary mobile group identity (TMGI) of an upcoming service. A data volume of the service indication information is smaller than a data volume of the Single Cell-Multicast Control Channel (SC-MCCH) information.

The service screening unit 1220 is configured to, in a case where the service indication information is detected, determine whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment.

The service information receiving unit 1230 is configured to, in a case where a match is determined by the service screening unit, receive and decode Single Cell-Multicast Control Channel (SC-MCCH) information in a downlink shared channel (NPDSCH), the Single Cell-Multicast Control Channel (SC-MCCH) information includes temporary mobile group identity (TMGI) of upcoming services, and temporary mobile group identity (TMGI) of ongoing services.

According to the first embodiment of the present disclosure, the service indication information is a predetermined number of bits in the change notification message, the service indication information includes at least a portion of bits of a service identity (ID) or a temporary mobile group identity (TMGI) of the upcoming service, so as to indicate the service group to which the upcoming service belongs, and the base station (eNB) transmits the change notification message to the user equipment (UE) in a multicast or broadcast manner in a downlink control channel (NPDCCH).

Further, according to the first embodiment of the present disclosure, the number of service groups to which the upcoming services belong as indicated in the service indication information is a predetermined indication number, and the base station further comprises: a service storing unit configured to, in a case where a total number of service groups to which the upcoming services belong exceeds the predetermined indication number, store upcoming services not indicated in the service indication information. The service indicating unit is further configured to: in a case where the number of service groups to which the stored upcoming services belong exceeds a predetermined storage threshold, indicate all upcoming services in the change notification message.

In the base station according to the first embodiment of the present disclosure, the service indicating unit 1120 generates service indication information with a predetermined number of bits and includes the service indication information into a change notification message, the information multicasting unit 1130 is specifically configured to transmit the service indication information to the user equipment in a multicast or broadcast manner in a downlink shared channel (NPDSCH); also, the information multicasting unit 1130 is further configured to transmit the Single Cell-Multicast Control Channel (SC-MCCH) information to the user equipment in a multicast or broadcast manner in a downlink shared channel (NPDSCH).

In the user equipment according to the first embodiment of the present disclosure, the service monitoring unit 1210 is configured to monitor the change notification message including the service indication information in a downlink control channel (NPDCCH). The user equipment further comprises a state control unit (not shown) configured to: in a case where it is determined by the service screening unit 1220 that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, control the user equipment to enter the sleep state again.

According to the second embodiment of the present invention, the service indication information is transmitted in a multicast or broadcast manner in a downlink shared channel (NPDSCH).

In the base station according to the second embodiment of the present disclosure, the service indicating unit 1120 generates service indication information with a predetermined number of bits, the service indication information including at least a portion of bits of a service identity (ID) or a temporary mobile group identity (TMGI) of upcoming services; the information multicasting unit 1130 is specifically configured to transmit the service indication information to the user equipment in a multicast or broadcast manner in a downlink shared channel (NPDSCH); also, the information multicasting unit 1130 is further configured to, before transmitting the service indication information, transmit the downlink control information (DCI) to the user equipment in a multicast or broadcast manner in the downlink control channel (NPDCCH), and after transmitting the service indication information, transmit the Single Cell-Multicast Control Channel (SC-MCCH) information to the user equipment in a multicast or broadcast manner in the downlink shared channel (NPDSCH), wherein the downlink control information (DCI) is used to indicate the service indication information.

In the user equipment according to the second embodiment of the present disclosure, the service monitoring unit 1210 is configured to monitor downlink control information (DCI) in the downlink control channel (NPDCCH); and in a case where downlink control information (DCI) is detected, receive and decode the service indication information in the downlink shared channel (NPDSCH). The user equipment further comprises a state control unit (not shown) configured to: in a case where it is determined by the service screening unit 1220 that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, control the user equipment to enter the sleep state again.

For a service, it is assumed that the temporary mobile group identity (TMGI) is 64 bits, the Group Radio Network Temporary Identifier (G-RNTI) is 64 bits, and the scheduling information is 13 bits.

Assuming that there is an upcoming service, only the temporary mobile group identity (TMGI) (64 bits) of the upcoming service is included in the service indication information; and the Single Cell-Multicast Control Channel (SC-MCCH) information includes not only the temporary mobile group identity (TMGI) (64 bits), the Group Radio Network Temporary Identifier (G-RNTI) (64 bits), and the scheduling information (13 bits) of upcoming services, but also the TMGI, the G-RNTI, and the scheduling information of ongoing services.

The following transmission parameters are assumed: the transport block size index I_{TMS} is 5, and the number of data repetitions is 4. FIG. 13 shows power consumption ratio of the conventional method for service discovery shown in Table 1 and FIG. 4 and the method for service discovery according to the second embodiment of the present disclosure in a case of one upcoming service and different numbers of ongoing services under given transmission parameters.

According to an embodiment of the present disclosure, by means of including at least a portion of bits of a service identification (ID) or a temporary mobile group identity (TMGI) of an upcoming service in the service indication information, and transmitting the service indication information before transmitting the Single Cell-Multicast Control Channel (SC-MCCH) information in a multicast or broadcast manner, the user equipment (UE) can accurately determine whether the upcoming service indicated by the service indication information is a service of interest, or the user equipment (UE) can accurately determine whether a relatively small service group indicated by the service indication information includes a service of interest, in this way, only when the user equipment (UE) determines that the upcoming service is a service of interest or the upcoming service is very likely to be a service of interest, the user equipment receives and decodes the Single Cell-Multicast Control Channel (SC-MCCH) information, thereby unnecessary Single Cell-Multicast Control Channel (SC-MCCH) information decoding by the user equipment (UE) cannot be effectively avoided.

It should be noted that, in the specification, the terms "comprise", "include" and any other variations thereof intend to cover nonexclusive inclusion so that the procedure, the method, the product or the equipment including a series of elements include not only these elements, but also other elements which are not listed explicitly, or also include inherent elements of these procedure, method, product or equipment. In the case that there is no further limitation, elements defined by the expressions "comprise a/an..." do not exclude there being additional identical elements in the procedure, method, product or equipment of the elements.

In addition, in this specification, the expressions like "first", "second", etc. are used for convenience of description only, and do not mean that the defined unit must be implemented as a plurality of separate units, It does not mean that there are prioritized steps in the defined steps, and so on.

Finally, it should be noted that, the above-described series of process do not only comprise process executed chronologically in the order mentioned here, and also comprise process executed in parallel or individually but not chronologically.

Through the above description of the implementations, a person skilled in the art can clearly understand that the present disclosure may be implemented in a manner of software plus a necessary hardware platform, and of course the present disclosure may also be implemented fully by hardware. Based on such understanding, the technical solution of the present disclosure that contributes to the background art may be embodied in whole or in part in the form of a software product. The computer software product may be stored in a storage medium, such as ROM/RAM, disk, CD-ROM, and include several instructions for causing a computer apparatus (which may be a personal computer, a server, or a network device) to perform the method described in the various embodiments of the present disclosure or certain parts thereof.

Although the present disclosure has been described in detail in the above, specific examples are applied in this text to demonstrate the principles and implementations of the present disclosure, these descriptions of the above embodiments are only to help understand the method for the present disclosure and its core concept. Meanwhile, for a person with ordinary skill in the art, depending on the concepts of the present disclosure, modifications may be made to the specific implementations and disclosures. To sum up, contents of this specification should not be construed as limiting the present disclosure.

The present application claims the priority of the Chinese application filed previously on August 11, 2016, with the application number of "201610659872.8" and entitled "service indication and discovering method, base station and user equipment", the contents of which are hereby incorporated in entirety by reference.

## Claims

1. A method for a base station to perform service indication, comprising:
detecting upcoming services;
in a case where an upcoming service is detected, generating service indication information that includes at least a portion of bits of a service identity (ID) or a temporary mobile group identity (TMGI) of the upcoming service; and
transmitting the service indication information to a user equipment in a multicast or broadcast manner,
wherein a data volume of the service indication information is smaller than a data volume of the Single Cell-Multicast Control Channel (SC-MCCH) information.

2. The method according to claim 1, wherein the service indication information is a predetermined number of bits in a change notification message, and the service indication information includes a portion of bits of the service identity (ID) or the temporary mobile group identity (TMGI) of the upcoming services so as to indicate service groups to which the upcoming services belong,
wherein transmitting the service indication information to a user equipment in a multicast or broadcast manner comprises: transmitting, in a downlink control channel (NPDCCH), the change notification message that includes the service indication information to the user equipment in a multicast or broadcast manner.

3. The method according to claim 2, wherein the number of service groups to which the upcoming services belong as indicated in the service indication information is a predetermined indication number, the method further comprises:
in a case where a total number of service groups to which the upcoming services belong exceeds the predetermined indication number, storing upcoming services not indicated in the service indication information.

4. The method according to claim 3, further comprising:
in a case where the number of service groups to which the stored upcoming services belong exceeds a predetermined storage threshold, indicating all upcoming services in the change notification message.

5. The method according to claim 2, further comprising:
transmitting the Single Cell-Multicast Control Channel (SC-MCCH) information to the user equipment in a multicast or broadcast manner in a downlink shared channel (NPDSCH).

6. The method according to claim 1, wherein transmitting the service indication information to a user equipment in a multicast or broadcast manner comprises: transmitting the service indication information to the user equipment in a multicast or broadcast manner in a downlink shared channel (NPDSCH).

7. The method according to claim 6, further comprising:
before transmitting the service indication information, transmitting downlink control information (DCI) to the user equipment in a multicast or broadcast manner in the downlink control channel (NPDCCH), the downlink control information (DCI) being used to indicate the service indication information; and
after transmitting the service indication information, transmitting the Single Cell-Multicast Control Channel (SC-MCCH) information to the user equipment in a multicast or broadcast manner in the downlink shared channel (NPDSCH).

8. A base station, comprising:
a service detecting unit configured to detect upcoming services;
a service indicating unit configured to, in a case where an upcoming service is detected by the service detecting unit, generate service indication information that includes at least a portion of bits of a service identity (ID) or a temporary mobile group identity (TMGI) of the upcoming service; and
an information multicasting unit configured to transmit the service indication information to a user equipment in a multicast or broadcast manner,
wherein a data volume of the service indication information is smaller than a data volume of the Single Cell-Multicast Control Channel (SC-MCCH) information.

9. The base station according to claim 8, wherein the service indication information is a predetermined number of bits in a change notification message, and the service indication information includes a portion of bits of the service identity (ID) or the temporary mobile group identity (TMGI) of the upcoming services so as to indicate service groups to which the upcoming services belong,
wherein the information multicasting unit is configured to transmit, in a downlink control channel (NPDCCH), the change notification message that includes the service indication information to the user equipment in a multicast or broadcast manner.

10. The base station according to claim 9, wherein the number of service groups to which the upcoming services belong as indicated in the service indication information is a predetermined indication number, and the base station further comprises:
a service storing unit configured to, in a case where a total number of service groups to which the upcoming services belong exceeds the predetermined indication number, store upcoming services not indicated in the service indication information.

11. The base station according to claim 10, wherein the service indicating unit is further configured to: in a case where the number of service groups to which the stored upcoming services belong exceeds a predetermined storage threshold, indicate all upcoming services in the change notification message.

12. The base station according to claim 9, wherein the information multicasting unit is further configured to transmit the Single Cell-Multicast Control Channel (SC-MCCH) information to the user equipment in a multicast or broadcast manner in a downlink shared channel (NPDSCH).

13. The base station according to claim 8, wherein
the information multicasting unit is configured to transmit the service indication information to the user equipment in a multicast or broadcast manner in a downlink shared channel (NPDSCH).

14. The base station according to claim 13, wherein
the information multicasting unit is further configured to:
before transmitting the service indication information, transmit the downlink control information (DCI) to the user equipment in a multicast or broadcast manner in the downlink control channel (NPDCCH); and
after transmitting the service indication information, transmit the Single Cell-Multicast Control Channel (SC-MCCH) information to the user equipment in a multicast or broadcast manner in the downlink shared channel (NPDSCH),
wherein the downlink control information (DCI) is used to indicate the service indication information.

15. A method for performing service discovery by a user equipment in a sleep state, comprising:
monitoring service indication information, the service indication information including at least a portion of bits of a service identity (ID) or a temporary mobile group identity (TMGI) of an upcoming service;
in a case where the service indication information is detected, determining whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment; and
in a case where a match is determined, receiving and decoding Single Cell-Multicast Control Channel (SC-MCCH) information in a downlink shared channel (NPDSCH),
wherein a data volume of the service indication information is smaller than a data volume of the Single Cell-Multicast Control Channel (SC-MCCH) information.

16. The method according to claim 15, wherein the service indication information is a predetermined number of bits in a change notification message,
monitoring service indication information comprises:
monitoring the change notification message that includes the service indication information in a downlink control channel (NPDCCH).

17. The method according to claim 15, wherein
monitoring service indication information comprises:
monitoring downlink control information (DCI) in the downlink control channel (NPDCCH); and
in a case where downlink control information (DCI) is detected, receiving and decoding the service indication information in the downlink shared channel (NPDSCH).

18. The method according to claim 15, wherein in a case where it is determined that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, the method further comprises:
entering the sleep state again.

19. A user equipment, comprising:
a service monitoring unit configured to monitor service indication information, the service indication information including at least a portion of bits of a service identity (ID) or a temporary mobile group identity (TMGI) of an upcoming service;
a service screening unit configured to, in a case where the service indication information is detected, determine whether the at least a portion of bits of the service identity (ID) or the temporary mobile group identity (TMGI) of the upcoming service included in the service indication information matches with corresponding bits in the pre-stored service identity (ID) or temporary mobile group identity (TMGI) in the user equipment; and
a service information receiving unit configured to, in a case where a match is determined by the service screening unit, receive and decode Single Cell-Multicast Control Channel (SC-MCCH) information in a downlink shared channel (NPDSCH),
wherein a data volume of the service indication information is smaller than a data volume of the Single Cell-Multicast Control Channel (SC-MCCH) information.

20. The user equipment according to claim 19, wherein the service indication information is a predetermined number of bits in a change notification message, and
wherein the service monitoring unit is configured to monitor the change notification message that includes the service indication information in a downlink control channel (NPDCCH).

21. The user equipment according to claim 20, wherein the service monitoring unit is configured to:
monitor downlink control information (DCI) in the downlink control channel (NPDCCH); and
in a case where downlink control information (DCI) is detected, receive and decode the service indication information in the downlink shared channel (NPDSCH).

22. The user equipment according to claim 21, further comprising:
a state control unit configured to: in a case where it is determined by the service screening unit that the at least a portion of bits of the service identity (ID) or the temporary mobile group identity (TMGI) of the upcoming service included in the service indication information does not match with corresponding bits in the pre-stored service identity (ID) or temporary mobile group identity (TMGI) in the user equipment, control the user equipment to enter the sleep state again.
